# EUROPEAN PATENT APPLICATION

(11) **EP 4 491 653 A1**
(43) Date of publication of application: **15.01.2025**
(21) Application number: 23766748.0
(22) Date of filing: 03.03.2023
(51) Int. Cl.: C08G 59/50, C09J 11/06, C09J 163/00

(54) **ONE-PACK TYPE EPOXY RESIN COMPOSITION**

(30) Priority: 09.03.2022 JP 2022036282
(71) Applicant: ADEKA CORPORATION, Arakawa-ku Tokyo 116-8554 (JP)
(72) Inventor: MIWA, Takuya, Tokyo 116-8554 (JP); HASEGAWA, Yui, Tokyo 116-8554 (JP); TAMASO, Ken-ichi, Tokyo 116-8554 (JP)
(74) Representative: Forstmeyer, Dietmar
(86) International application number: PCT/JP2023/008106
(87) International publication number: WO 2023/171572

(57) **Abstract**

An objective of the present invention is to provide an epoxy resin composition containing a reactive diluent capable of reducing viscosity while maintaining the epoxy resin's original properties as much as possible, and also capable of imparting novel additional effects such as adhesiveness, storage stability, etc. The invention relates to a one-pack type epoxy resin composition containing: component (A): a compound represented by general formula (1); component (B): an epoxy resin; and component (C): an amine-based curing agent. In the general formula (1), R¹ represents a hydrogen atom or a methyl group; R² and R³ each independently represent a hydrogen atom, an alkyl group having 1 to 6 carbon atoms, or an alkoxy group having 1 to 6 carbon atoms; and n represents an integer of 1 to 3.

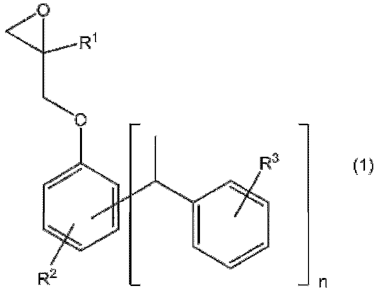

## Description

### Technical Field

The present invention relates to a one-pack type epoxy resin composition, and more specifically, relates to a one-pack type epoxy resin composition containing a specific epoxy compound, an epoxy resin, and an amine-based curing agent.

### Background Art

Epoxy resins exhibit excellent properties in a wide range of applications, such as adhesives, coating materials, electrical insulating materials, civil engineering/construction materials, etc. Many types of epoxy resins for general purpose use, typified by bisphenol-type epoxy resins, have high viscosity, and may thus have problems in workability depending on the purpose of use. For example, plasticizers may be used to improve workability, but plasticizers that are not involved in the epoxy resin reaction may significantly deteriorate physical properties after the resin has been cured. Therefore, a reactive diluent having an epoxy group is often used in combination.

Epoxy group-containing reactive diluents are required not to deteriorate the epoxy resin's properties before being diluted. For example, Patent Literatures 1 and 2 provide reactive diluents that have two or more epoxy groups and are capable of reducing the resin's viscosity while suppressing deterioration in physical properties of cured products after the resin has been cured.

### Citation List

### Patent Literature

Patent Literature 1: JP 2006-083306A
Patent Literature 2: JP 2004-231787A

### Summary of Invention

### Technical Problem

However, in applications employing such epoxy resins, not only is there a need to simply dilute the epoxy resins, but there is also a need to impart additional effects to the epoxy resins' original properties. Meanwhile, some reactive diluents are known to significantly deteriorate the storage stability of epoxy resin compositions in cases where an epoxy resin and a curing agent are used in combination.

Therefore, an objective to be achieved by the present invention is to provide an epoxy resin composition containing a reactive diluent capable of reducing viscosity while maintaining the epoxy resin's original properties as much as possible, and also capable of imparting novel additional effects such as adhesiveness, storage stability, etc.

### Solution to Problem

Inventors diligently conducted studies to find a one-pack type epoxy resin composition containing a specific epoxy compound, an epoxy resin, and an amine-based curing agent, to thus accomplish the present invention.

More specifically, the present invention relates to a one-pack type epoxy resin composition including:
component (A): a compound represented by general formula (1) below;
component (B): an epoxy resin; and
component (C): an amine-based curing agent.

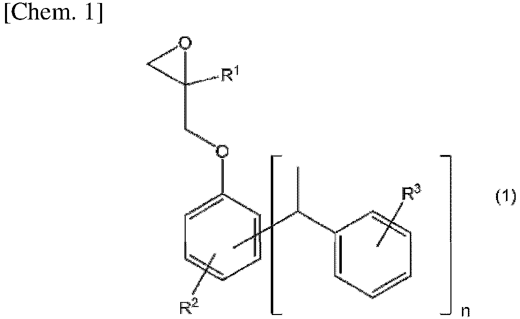

In the general formula (1), R¹ represents a hydrogen atom or a methyl group; R² and R³ each independently represent a hydrogen atom, an alkyl group having 1 to 6 carbon atoms, or an alkoxy group having 1 to 6 carbon atoms; and n represents an integer of 1 to 3.

### Advantageous Effects of Invention

The one-pack type epoxy resin composition of the present invention has low viscosity, has excellent storage stability when used in combination with an amine-based curing agent, and also has excellent adhesiveness to such materials as gold and engineering plastics, which are considered as being difficult to bond according to conventional art. Therefore, the present composition can suitably be used in applications for electronic materials in which the aforementioned materials are used.

### Description of Embodiments

Component (A) in the one-pack type epoxy resin composition of the present invention is a compound represented by general formula (1) below. 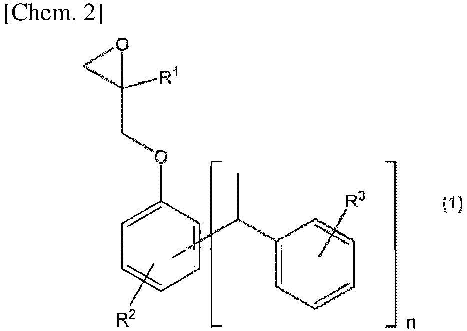 In the general formula (1), R¹ represents a hydrogen atom or a methyl group; R² and R³ each independently represent a hydrogen atom, an alkyl group having 1 to 6 carbon atoms, or an alkoxy group having 1 to 6 carbon atoms; and n represents an integer of 1 to 3.

From the viewpoint of reactivity, it is preferable that R¹ in general formula (1) is a hydrogen atom.

Examples of the alkyl group having 1 to 6 carbon atoms, as represented by R² and R³ in general formula (1), may include a methyl group, an ethyl group, a propyl group, an iso-propyl group, a butyl group, a sec-butyl group, a tert-butyl group, an iso-butyl group, an amyl group, an iso-amyl group, a tert-amyl group, a hexyl group, etc.

Examples of the alkoxy group having 1 to 6 carbon atoms, as represented by R² and R³ in general formula (1), may include groups in which the aforementioned alkyl groups are bonded to an oxygen atom.

From the viewpoint of achieving the effects of the present invention more easily, it is preferable that R² and R³ in general formula (1) are each a hydrogen atom or an alkyl group having 1 to 4 carbon atoms, and more preferably, a hydrogen atom. R² and R³ may be the same or different from one another, but from the viewpoint of achieving the effects of the present invention more easily, it is preferable that they are the same.

There is no particular limitation to methods for producing compounds represented by the general formula (1) to be used in the present invention. An example is a method of epoxidizing styrenated phenol with epichlorohydrin or methylepichlorohydrin (referred to hereinafter collectively as "epichlorohydrin etc.").

Styrenated phenol can be obtained by addition of styrene to phenol through combined use of, for example, an acidic catalyst such as AlCl₃. The number n in general formula (1) is determined by adjusting the number of moles of styrene added to 1 mol of phenol. In the present invention, n is an integer of 1 to 3, and preferably an integer of 1 to 2.

Further, the compound represented by general formula (1) may be a mixture of compounds in which n is mutually different. In such cases, from the viewpoint of low viscosity, it is preferable that the average value of n is from 1.2 to 1.5. From the viewpoint of achieving high adhesiveness, it is preferable that the average value of n is from 2.8 to 3.0. From the viewpoint of achieving both low viscosity and high adhesiveness, it is preferable that the average value of n is from 2.2 to 2.6.

An example of a method for making epichlorohydrin etc. react with styrenated phenol is to cause 0.9 to 1.2 mol of a basic compound, such as sodium hydroxide or potassium hydroxide, and 1 to 10 mol of epichlorohydrin etc. to react with 1 mol of styrenated phenol, using a phase-transfer catalyst if necessary, at atmospheric pressure or under reduced pressure conditions at a temperature of 40 to 120°C. In this process, it is preferable to remove excessive epichlorohydrin etc. by distillation.

Examples of the phase-transfer catalyst may include tetramethylammonium salts, tetrabutylammonium salts, etc. In cases of using a phase-transfer catalyst, it is preferable to use from 0.001 to 0.1 mol of the phase-transfer catalyst with respect to 1 mol of styrenated phenol.

The compound represented by general formula (1) obtained, for example, through the aforementioned method may be subjected to separation/purification by separation/purification means such as oil-water separation using water or an organic solvent, filtration, concentration, distillation, extraction, crystallization, recrystallization, adsorption, column chromatography, etc., or means employing the above in combination.

In producing the compound represented by general formula (1), there may be cases where by-products due to the reaction with epichlorohydrin etc. are included, even after undergoing the aforementioned separation/purification step. In the present invention, a product including such by-products is treated as "compound represented by general formula (1)", and the quality thereof is managed by numerical values such as epoxy equivalent, viscosity, total chlorine amount, etc.

It is preferable that the epoxy equivalent of the compound represented by general formula (1) is preferably from 250 to 500 g/eq., more preferably from 280 to 480 g/eq. Note that the "epoxy equivalent" can be measured pursuant to JIS K 7236:2001 (corresponding to ISO 3001:1999).

From the viewpoint of low viscosity, the epoxy equivalent of the compound represented by general formula (1) is preferably from 250 to 350 g/eq., more preferably from 280 to 330 g/eq.

From the viewpoint of achieving both low viscosity and high adhesiveness, the epoxy equivalent of the compound represented by general formula (1) is preferably from 330 to 450 g/eq., more preferably from 350 to 420 g/eq.

From the viewpoint of achieving high adhesiveness, the epoxy equivalent of the compound represented by general formula (1) is preferably from 400 to 500 g/eq., more preferably from 420 to 480 g/eq.

The viscosity of the compound represented by general formula (1) at 25°C is preferably from 10 mPa·s to 300 Pa·s, more preferably from 100 mPa·s to 200 Pa·s.

The viscosity can be selected as appropriate depending on the application, but in cases where low viscosity is preferred, the viscosity of the compound represented by general formula (1) at 25°C is preferably from 50 to 500 mPa·s, more preferably from 100 to 250 mPa·s.

In cases where it is preferable to achieve both low viscosity and high adhesiveness, the viscosity at 25°C is preferably from 1000 to 5000 mPa·s, more preferably from 1500 to 3000 mPa·s.

In cases where high adhesiveness is required, the viscosity at 25°C is preferably from 10 to 300 Pa·s, more preferably from 50 to 200 Pa·s.

Note that the viscosity can be measured with a cone plate-type rotational viscometer (E-type viscometer).

The conditions for measuring the viscosity vary depending on the sample to be measured. More specifically, in cases of measuring a sample having a viscosity of 50 to 500 mPa, the conditions are as follows: E-type viscometer (using 1°34'×R24 cone rotor); range: H; rotation speed: 20 rpm; 25°C. In cases of measuring a sample having a viscosity of 1000 to 5000 mPa, the conditions are as follows: E-type viscometer (using 3°×R14 cone rotor); range: H; rotation speed: 10 rpm; 25°C. In cases of measuring a sample having a viscosity of 50 to 200 Pa, the conditions are as follows: E-type viscometer (using 3°×R14 cone rotor); range: U; rotation speed: 2.5 rpm; 25°C.

The total chlorine amount of the compound represented by general formula (1) is preferably from 0 to 3000 ppm, more preferably from 0 to 1500 ppm. Note that the total chlorine amount can be measured through combustion-coulometric determination.

Examples of the epoxy resin, which is component (B) in the one-pack type epoxy resin composition of the present invention, may include: polyglycidyl ether products of mononuclear polyhydric phenol compounds such as hydroquinone, resorcin, pyrocatechol, phloroglucinol, etc.; polyglycidyl ether products of polynuclear polyhydric phenol compounds such as dihydroxynaphthalene, biphenol, methylene bisphenol (bisphenol F), methylene bis(o-cresol), ethylidene bisphenol, isopropylidene bisphenol (bisphenol A), isopropylidene bis(o-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, terpene phenol, etc.; polyglycidyl ethers of polyols such as ethylene glycol, propylene glycol, butylene glycol, hexanediol, polyglycol, thiodiglycol, dicyclopentadiene dimethanol, 2,2-bis(4-hydroxycyclohexylpropane) (hydrogenated bisphenol A), glycerin, trimethylolpropane, pentaerythritol, sorbitol, etc.; glycidyl esters of aliphatic, aromatic or alicyclic polybasic acids such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, endomethylene tetrahydrophthalic acid, etc., and homopolymers or copolymers of glycidyl methacrylate; epoxy compounds having a glycidylamino group, such as N,N-diglycidylaniline, bis(4-(N-methyl-N-glycidylamino)phenyl)methane, diglycidyl ortho-toluidine, N,N-bis(2,3-epoxy propyl)-4-(2,3-epoxy propoxy)-2-methylaniline, N,N-bis(2,3-epoxy propyl)-4-(2,3-epoxy propoxy)aniline, N,N,N',N'-tetra(2,3-epoxy propyl)-4,4'-diaminodiphenylmethane, etc.; epoxidized products of cyclic olefin compounds, such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl) adipate, etc.; epoxidized conjugated diene polymers, such as epoxidized polybutadiene, epoxidized styrene-butadiene copolymer, etc.; and heterocyclic compounds, such as triglycidyl isocyanurate, etc. One type of the above may be used singly, or two or more types may be used in combination.

Among the epoxy resins given above, bisphenol-type epoxy resins are preferable from the viewpoint of easy availability and excellent properties of cured products.

In the one-pack type epoxy resin composition of the present invention, component (A) has an effect of reducing viscosity and also has an effect of improving properties as an adhesive for various substrates. If the content is too low, it may not be possible to achieve the effects of viscosity reduction and adhesive property improvement, whereas if the content is too high, the various other properties (such as heat resistance and elastic modulus) of the composition may deteriorate. From the viewpoint of balancing the above, the content of component (A) is preferably from 1 to 50 mass%, more preferably from 10 to 50 mass%, even more preferably from 20 to 40 mass%, with respect to the total mass of component (A) and component (B).

For the amine-based curing agent, which is component (C) in the one-pack type epoxy resin composition of the present invention, it is possible to use a known curing agent, with examples including: alkylene diamines, such as ethylenediamine, 1,2-diaminopropane, 1,3-diaminopropane, 1,3-diaminobutane, 1,4-diaminobutane, hexamethylenediamine, etc.; polyalkylpolyamines, such as diethylenetriamine, triethylenetriamine, tetraethylenepentamine, etc.; alicyclic polyamines, such as 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4' -diaminodicyclohexylmethane, 1,3-bis(aminomethyl)cyclohexane, 1,4-bis(aminomethyl)cyclohexane, 4,4'-diaminodicyclohexylpropane, bis(4-aminocyclohexyl)sulfone, 4,4'-diaminodicyclohexyl ether, 2,2'-dimethyl-4,4'-diaminodicyclohexylmethane, isophorone diamine, norbornene diamine, etc.; aromatic polyamines, such as m-xylylenediamine, diaminodiphenylmethane, diaminodiphenylsulfone, diethyltoluenediamine, 1-methyl-3,5-diethyl-2,4-diaminobenzene, 1-methyl-3,5-diethyl-2,6-diaminobenzene, 1,3,5-triethyl-2,6-diaminobenzene, 3,3'-diethyl-4,4'-diaminodiphenylmethane, 3,5,3',5'-tetramethyl-4,4'-diaminodiphenylmethane, etc.; guanamines, such as benzoguanamine, acetoguanamine, etc.; imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, 2-aminopropylimidazole, etc.; dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, phthalic acid dihydrazide, etc.; N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N-(3-aminopropyl)pyrrolidine, N- (3 - aminopropyl)piperidine, N-(3-aminopropyl)morpholine, N-(3-aminopropyl)piperazine, N-(3-aminopropyl)-N'-methylpiperidine, 4-(N,N-dimethylamino)benzylamine, 4-(N,N-diethylamino)benzylamine, 4-(N,N-diisopropylamino)benzylamine, N,N-dimethylisophoronediamine, N,N-dimethylbisaminocyclohexane, N,N,N'-trimethylethylenediamine, N'-ethyl-N,N-dimethylethylenediamine, N,N,N' -trimethylethylenediamine, N' -ethyl-N,N-dimethylpropanediamine, N'-ethyl-N,N-dibenzylaminopropylamine, N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis [3-(N,N-diethylaminopropyl)] amine, bis [3-(N,N-diisopropylaminopropyl)] amine, bis[3-(N,N-dibutylaminopropyl)]amine, etc. One type of the above may be used singly, or two or more types may be used in combination.

From the viewpoint of further improving storage stability of the composition, it is preferable that the component (C) is an amine-based latent curing agent. An "amine-based latent curing agent" refers to a curing agent having an amino group in its structure and exhibiting little change in viscosity and physical properties at room temperature in a mixture with a compound including an epoxy group. By including the component (A), the one-pack type epoxy resin composition of the present invention has better storage stability compared to conventional compositions containing an epoxy resin and an amine-based latent curing agent.

Examples of the amine-based latent curing agent may include dicyandiamide-type, imidazole-type, polyamine-type, and polyurea-type latent curing agents.

Examples of dicyandiamide-type latent curing agents may include dicyandiamide used singly, or mixtures including later-described curing accelerators if necessary.

An imidazole-type latent curing agent can be obtained, for example, by making an epoxy compound react with an active hydrogen-containing imidazole compound, using a solvent if necessary, at 50 to 150°C for 1 to 20 hours. In cases where a solvent is used, after termination of the reaction, the solvent is removed at atmospheric pressure or reduced pressure at a temperature from 80 to 200°C.

Examples of imidazole compounds to be used for producing imidazole-type latent curing agents may include 2-methylimidazole, 2-ethyl-4-methylimidazole, 2-undecylimidazole, 2-heptadecylimidazole, 2-phenylimidazole, etc.

Examples of epoxy compounds to be used for producing imidazole-type latent curing agents may include the epoxy compounds given as examples for component (B).

Examples of solvents to be used for producing imidazole-type latent curing agents may include: ketones, such as methyl ethyl ketone, methyl amyl ketone, diethyl ketone, acetone, methyl isopropyl ketone, propylene glycol monomethyl ether acetate, cyclohexanone, etc.; ethers, such as tetrahydrofuran, 1,2-dimethoxyethane, 1,2-diethoxyethane, propylene glycol monomethyl ether, etc.; esters, such as ethyl acetate, n-butyl acetate, etc.; aromatic hydrocarbons, such as benzene, toluene, xylene, etc.; halogenated aliphatic hydrocarbons, such as carbon tetrachloride, chloroform, trichloroethylene, methylene chloride, etc.; and halogenated aromatic hydrocarbons, such as chlorobenzene, etc.

A polyamine-type latent curing agent can be obtained, for example, by making an epoxy compound react with a polyamine, using a solvent if necessary, at 50 to 150°C for 1 to 20 hours. In cases where a solvent is used, after termination of the reaction, the solvent is removed at atmospheric pressure or reduced pressure at a temperature from 80 to 200°C.

Examples of polyamines to be used for producing polyamine-type latent curing agents may include amine compounds given as examples for the amine-based curing agent and including two or more active hydrogens. One type of the above may be used singly, or two or more types may be used in combination.

Examples of epoxy compounds to be used for producing polyamine-type latent curing agents may include the epoxy compounds given as examples for component (B).

A polyurea-type latent curing agent can be obtained, for example, by making a polyisocyanate react with a polyamine, using a solvent if necessary, at 50 to 150°C for 1 to 20 hours. In cases where a solvent is used, after termination of the reaction, the solvent is removed at atmospheric pressure or reduced pressure at a temperature from 80 to 200°C.

Examples of polyamines to be used for producing polyurea-type latent curing agents may include amine compounds given as examples for the amine-based curing agent and including two or more active hydrogens.

Examples of polyisocyanates to be used for producing polyurea-type latent curing agents may include: aromatic diisocyanates, such as phenylene diisocyanate, tolylene diisocyanate, diphenylmethane diisocyanate, naphthalene diisocyanate, xylylene diisocyanate, etc.; and aliphatic or alicyclic structure-containing diisocyanates, such as hexamethylene diisocyanate, lysine diisocyanate, cyclohexane diisocyanate, isophorone diisocyanate, 4,4'-dicyclohexylmethane diisocyanate, tetramethylxylylene diisocyanate, etc. The NCO group in these polyisocyanates may be blocked by a blocking agent.

Examples of NCO group blocking agents may include: active methylene compounds, such as malonic diesters (such as diethyl malonate), acetylacetone, acetoacetic esters (such as ethyl acetoacetate), etc.; oxime compounds, such as acetoxime, methyl ethyl ketoxime (MEK oxime), methyl isobutyl ketoxime (MIBK oxime), etc.; monovalent alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, stearyl alcohol, etc., or isomers thereof; glycol derivatives, such as methyl glycol, ethyl glycol, ethyl diglycol, ethyl triglycol, butyl glycol, butyl diglycol, etc.; amine compounds, such as dicyclohexylamine, etc.; monophenols, such as phenol, cresol, ethylphenol, n-propylphenol, isopropylphenol, butylphenol, tert-butylphenol, octylphenol, nonylphenol, dodecylphenol, cyclohexylphenol, chlorophenol, bromophenol, etc.; diphenols, such as resorcin, catechol, hydroquinone, bisphenol A, diallylbisphenol A, bisphenol S, bisphenol F, naphthol, etc.; ε-caprolactam, etc.

In cases of using an amine-based latent curing agent as the component (C), a phenolic resin may be used in combination to improve the storage stability of the composition. The usage amount of phenolic resin when used in combination may be, for example, from 10 to 50 mass% with respect to the total mass of the amine-based latent curing agent.

Examples of phenol resins may include polyhydric phenol compounds, such as phenol novolac resin, cresol novolac resin, aromatic hydrocarbon formaldehyde resin-modified phenolic resin, dicyclopentadiene-phenol addition-type resin, phenol aralkyl resin (Xylok resin), naphthol aralkyl resin, trisphenylol methane resin, tetraphenylol ethane resin, naphthol novolac resin, naphthol-phenol co-condensed novolac resin, naphthol-cresol co-condensed novolac resin, biphenyl-modified phenolic resin (a polyhydric phenol compound wherein phenol nuclei are linked by a bismethylene group), biphenyl-modified naphthol resin (a polyhydric naphthol compound wherein phenol nuclei are linked by a bismethylene group), aminotriazine-modified phenolic resin (a compound containing a phenol skeleton, a triazine ring and a primary amino group in its molecular structure), and alkoxy group-containing aromatic ring-modified novolac resin (a polyhydric phenol compound wherein a phenol nucleus and an alkoxy group-containing aromatic ring are linked by formaldehyde).

Commercially available products may be used for the amine-based latent curing agent, with examples including: Adeka Hardener EH-3636AS (from Adeka Corporation; dicyandiamide-type latent curing agent), Adeka Hardener EH-4351S (from Adeka Corporation; dicyandiamide-type latent curing agent), Adeka Hardener EH-5011S (from Adeka Corporation; imidazole-type latent curing agent), Adeka Hardener EH-5046S (from Adeka Corporation; imidazole-type latent curing agent), Adeka Hardener EH-4357S (from Adeka Corporation; polyamine-type latent curing agent), Adeka Hardener EH-5057P (from Adeka Corporation; polyamine-type latent curing agent), Adeka Hardener EH-5057PK (from Adeka Corporation; polyamine-type latent curing agent), Ajicure PN-23 (from Ajinomoto Fine-Techno Co., Inc.; amine adduct-based latent curing agent), Ajicure PN-40 (from Ajinomoto Fine-Techno Co., Inc.; amine adduct-based latent curing agent), Ajicure VDH (from Ajinomoto Fine-Techno Co., Inc.; hydrazide-based latent curing agent), Fujicure FXR-1020 (from T&K TOKA CO.,LTD; urea-type latent curing agent), etc.

The content of the component (C) in the one-pack type epoxy resin composition of the present invention is preferably from 1 to 100 parts by mass, more preferably from 5 to 70 parts by mass, with respect to a total mass of 100 parts by mass of component (A) and component (B).

The one-pack type epoxy resin composition of the present invention may contain a curing accelerator. By using the component (C) in combination with a curing accelerator, curing speed can be accelerated. Examples of the curing accelerator may include: phosphines, such as triphenylphosphine, etc.; phosphonium salts, such as tetraphenylphosphonium bromide, etc.; amines, such as benzyldimethylamine, 2,4,6-tris(dimethylaminomethyl)phenol, etc.; quaternary ammonium salts, such as trimethylammonium chloride, etc.; ureas, such as 3-(p-chlorophenyl)-1,1-dimethylurea, 3-(3,4-dichlorophenyl)-1,1-dimethylurea, 3-phenyl-1,1-dimethylurea, isophorone diisocyanate-dimethylurea, tolylene diisocyanate-dimethylurea, etc.; and complex compounds between boron trifluoride and amines, ether compounds, etc. The curing accelerator may be used singly, or two or more types may be used in combination. The content of the curing accelerator is not particularly limited, and may be set as appropriate depending on the use of the one-pack type epoxy resin composition of the present invention.

The curing accelerator may be of the core-shell type, with concrete examples including masterbatch-type curing accelerators disclosed in Japanese Patent Publication H07-005708B, Japanese Patent No. 4405741, etc. wherein a core component consisting of a solid tertiary amine and a shell component consisting of a reaction product of an epoxy resin and an amine compound are dispersed in an epoxy resin. From the viewpoint of the storage stability of the epoxy resin composition, it is preferable that such curing accelerators are used particularly in combination with thiol-based curing agents or acid anhydrides.

Commercially available products may be used for the masterbatch-type curing accelerator, with examples including the Novacure series, such as HX-3742, HX-3721, HXA9322HP, HXA3922HP, HXA3932HP, HXA5945HP, HXA9382HP, etc., from Asahi Kasei Corporation.

If necessary, inorganic fillers may be added to the one-pack type epoxy resin composition of the present invention. Examples of inorganic fillers may include silica such as fused silica, crystalline silica, fumed silica, etc., powders or conglobed beads of magnesium hydroxide, aluminum hydroxide, zinc borate, zinc molybdate, calcium carbonate, silicon nitride, silicon carbide, boron nitride, calcium silicate, potassium titanate, aluminum nitride, beryllia, zirconia, zircon, forsterite, steatite, spinel, mullite, titania, etc., and fibers such as glass fiber, etc.

If necessary, additives other than the aforementioned inorganic fillers may be added to the one-pack type epoxy resin composition of the present invention. Examples of such additives may include: silane coupling agents; non-reactive diluents (plasticizers), such as dioctyl phthalate, dibutyl phthalate, benzyl alcohol, coal tar, etc.; fibrous fillers, such as glass fiber, pulp fiber, synthetic fiber, ceramic fiber, etc.; reinforcing materials, such as glass cloth, aramid cloth, carbon fiber, etc.; pigments; lubricants, such as candelilla wax, carnauba wax, Japan wax, Chinese wax, beeswax, lanolin, spermaceti wax, montan wax, petroleum wax, aliphatic wax, aliphatic ester, aliphatic ether, aromatic ester, aromatic ether, etc.; thickeners; thixotropic agents; antioxidants; light stabilizers; UV absorbers; flame retardants; antifoaming agents; rust preventives; and commonly used additives, such as colloidal silica, colloidal alumina, etc. In the present invention, an adhesive resin, such as xylene resin, petroleum resin, etc., may be used in combination.

From the viewpoint of reliability at high temperature and high humidity, it is preferable that the one-pack type epoxy resin composition of the present invention has a small total chlorine amount, and more specifically, it is preferable that the total chlorine amount is preferably 3000 ppm or less, more preferably 1500 ppm or less. It is preferable that the total chlorine amount is small, and therefore, the ideal total chlorine amount is 0 ppm. Note that, in the present invention, the total chlorine amount can be measured by combustion-coulometric determination.

From the viewpoint of workability, it is preferable that the viscosity at 25°C of the one-pack type epoxy resin composition of the present invention is preferably from 2.0 to 50 Pa·s, more preferably from 2.0 to 30 Pa·s. Note that the viscosity can be measured with a cone-plate rotational viscometer (E-type viscometer).

The one-pack type epoxy resin composition of the present invention can be produced by stirring, melting, mixing and/or dispersing the components (A) to (C), as well as other components discretionarily added as necessary, while heating if necessary. In this case, the devices to be used for stirring, melting, mixing and/or dispersing are not particularly limited, and in the present invention, it is possible to use, for example, a stirrer, a mash-grinding machine equipped with a heating device, a three roll mill, a ball mill, a planetary mixer, a bead mill, a planetary stirrer, etc. These devices may be used in combination as appropriate.

The one-pack type epoxy resin composition of the present invention can suitably be used as an adhesive. Examples of substrates to be bonded by the adhesive may include substrates made from, for example, glass, metal, leather, wood materials, thermoplastic resins, fiber reinforced plastics, etc. Among these substrates, metal substrates and thermoplastic resin substrates are preferable, and metal substrates are more preferable.

Concrete examples of metals may include iron, aluminum, steel, copper, magnesium, titanium, and alloys of such metal(s) and other nonferrous metal(s). Among these metals, aluminum is preferable.

The surface of the metal substrate may be plated. Examples of types of plating treatments may include chromium plating, hard chromium plating, nickel plating, electroless nickel plating, zinc plating, gold plating, silver plating, etc. The one-pack type epoxy resin composition of the present invention can suitably be used as an adhesive particularly for metal substrates subjected to nickel plating or gold plating.

Concrete examples of the aforementioned thermoplastic resins may include vinyl chloride-based resin, polystyrene, polyester, polyamide, polyurethane, polyethylene, polypropylene, polyphenylene ether, polycarbonate, polyether sulfone, polysulfone, polyphenylene sulfone, polyphenylene sulfide, polyether ether ketone, liquid crystal polymer, etc.

The adhesive constituted by the one-pack type epoxy resin composition of the present invention has excellent adhesiveness to various substrates, and can thus be used as an adhesive for bonding together substrates of the same type, or substrates of different types, selected from the aforementioned substrates.

Other than uses as adhesives, the one-pack type epoxy resin composition of the present invention is applicable to various other uses, such as: resin materials for electronic circuit boards, such as laminates for printed circuit boards, interlayer dielectric materials for buildup boards, buildup adhesive films, die attach agents, flip-chip-mounting underfill materials, glob top materials, TCP liquid encapsulants, electroconductive adhesives, liquid crystal sealants, flexible board coverlay, resist ink, etc.; semiconductor encapsulants; optical materials, such as optical waveguides, optical films, etc.; resin casting materials; various optical semiconductor devices, such as LEDs, phototransistors, photodiodes, photocouplers, CCDs, EPROMs, photosensors, etc.; and products molded from fiber reinforced resins, such as CFRPs, etc.

### Examples

The present invention will be described in further detail below according to Examples.

### {Synthesis Example 1}

A flask equipped with a reflux device, a stirring device, a pressure reducing device, and a dropping device was charged with 250 g (OH equivalent: 1.15 eq) of styrenated phenol SP-F (from Sanko Co., Ltd.; product name: SP-F; OH equivalent: 218 g/eq) and 340 g (3.68 mol) of epichlorohydrin, and 18.54 g (sodium hydroxide: 0.11 mol) of a 48% sodium hydroxide aqueous solution was placed in the dropping device. The sodium hydroxide aqueous solution was dropped gradually at an internal temperature of 60 to 80°C, and after completion of dropping, reaction was continued for 1 hour. Then, the internal pressure was reduced down to 150 to 200 hPa, and 166.88 g (sodium hydroxide: 0.96 mol) of a 48% sodium hydroxide aqueous solution was placed in the dropping device. Once the internal pressure stabilized, the 48% sodium hydroxide aqueous solution was dropped over 1 hour. Water produced by the reaction during dropping and water present in the sodium hydroxide aqueous solution were removed by azeotropic dehydration. Then, the reaction was further continued for 2 hours, and after confirming that water within the system was removed completely, the solution was heated to a temperature of 120 to 130°C, and excessive epichlorohydrin was removed at atmospheric pressure or under reduced pressure. At this time, the epoxy equivalent of the reaction product within the system was 317 g/eq, and the saponifiable chlorine amount was 0.65%. Then, the temperature within the system was lowered to 60°C, and 300 g of toluene and 200 g of ion-exchanged water were added, to conduct oil-water separation. After conducting the oil-water separation three times, a toluene solution of a crude epoxy compound was obtained.

A flask equipped with a reflux device, a stirring device, and a dropping device was charged with the obtained toluene solution of the crude epoxy compound, and 11.46 g of a 48% sodium hydroxide aqueous solution and 15 g of ion-exchanged water were added respectively, and the mixture was stirred at 65°C for 30 minutes. Then, 0.18 g (0.81 mmol) of benzyltriethylammonium chloride was added to the reaction solution, and the reaction was further continued at 65°C for 2 hours. Then, oil-water separation with toluene/ion-exchanged water was conducted, followed by solvent removal and filtration, to obtain Epoxy compound 1.

Epoxy compound 1 contains, as a main component, a compound in which R¹, R², and R³ in the general formula (1) are all hydrogen atoms and the average value of n is 1.3. The epoxy equivalent of Epoxy compound 1 was 305 g/eq, the viscosity at 25°C was 186 mPa·s, the saponifiable chlorine amount was 143 ppm, and the total chlorine amount was 755 ppm.

Note that the viscosity was measured with a cone-plate rotational viscometer (E-type viscometer), the saponifiable chlorine amount was measured pursuant to JIS K 7243, and the total chlorine amount was measured by combustion-coulometric determination.

### {Synthesis Example 2}

Epoxy compound 2 was obtained by conducting the same operation as Synthesis Example 1, except that 250 g of styrenated phenol SP-F used in Synthesis Example 1 was changed to 353 g of styrenated phenol SP-24 (from Sanko Co., Ltd.; product name: SP-24; OH equivalent: 308 g/eq).

Epoxy compound 2 contains, as a main component, a compound in which R¹, R², and R³ in the general formula (1) are all hydrogen atoms and the average value of n is 2.4. The epoxy equivalent of Epoxy compound 2 was 378 g/eq, the viscosity at 25°C was 2332 mPa·s, the saponifiable chlorine amount was 290 ppm, and the total chlorine amount was 730 ppm.

### {Synthesis Example 3}

Epoxy compound 3 was obtained by conducting the same operation as Synthesis Example 1, except that 250 g of styrenated phenol SP-F used in Synthesis Example 1 was changed to 435 g of styrenated phenol TSP (from Sanko Co., Ltd.; product name: TSP, OH equivalent: 379 g/eq).

Epoxy compound 3 contains, as a main component, a compound in which R¹, R², and R³ in the general formula (1) are all hydrogen atoms and the average value of n is 3. The epoxy equivalent of Epoxy compound 2 was 460 g/eq, the viscosity at 25°C was 95 Pa·s, the saponifiable chlorine amount was 210 ppm, and the total chlorine amount was 640 ppm.

### {Example 1; Comparative Example 1 }

One-pack type epoxy resin compositions were prepared according to the compositional makeup (parts by mass) shown in Table 1, and the storage stability of each composition at 25°C and 40°C was evaluated. The evaluation method was as follows. Each composition was placed in a thermostatic chamber set to the temperatures described above, and the rate of increase (%) in viscosity, with respect to the viscosity of each composition immediately after preparation, after storage for 1 day and 7 days was calculated and evaluated.

The materials used in the compositions were as follows.
Component (A) - Epoxy compound 1: Compound produced in Synthesis Example 1.
Component (B) - EP-4100E: Bisphenol A-type epoxy resin from Adeka Corporation.
Component (B) - EP-4088L: Dicyclopentadiene-type epoxy resin from Adeka Corporation.
Component (C) - EH-5046S: Imidazole-type latent curing agent from Adeka Corporation.

**[Table 1]**

| | | | Example 1 | Comparative Example 1 |
|---|---|---|---|---|
| (A) | Epoxy compound 1 | | 20 | |
| (B) | EP-4100E | | 80 | 80 |
| | EP-4088L | | - | 20 |
| (C) | EH-5046S | | 20 | 20 |
| Viscosity (Pa·s) | | | 8.3 | 7.5 |
| Storage stability (%) | | 25°C; after 1 day | 103 | 113 |
| | | 25°C; after 7 days | 107 | 162 |
| | | 40°C; after 1 day | 111 | 165 |
| | | 40°C; after 7 days | 249 | 3189 |

Table 1 shows that, compared to Comparative Example 1 containing EP-4088L which is a dicyclopentadiene-type epoxy resin conventionally known as a material having the effect of diluting epoxy resin, the one-pack type epoxy resin composition of the present invention had the same level of viscosity and had superior storage stability at both temperature ranges of 25°C and 40°C.

### {Examples 2 to 5; Comparative Examples 2 and 3}

One-pack type epoxy resin compositions were prepared according to the compositional makeup (parts by mass) shown in Table 2, and the shear strength of the cured product of each composition was measured.

The materials used in the compositions were as follows.
Component (A) - Epoxy compound 1: Compound produced in Synthesis Example 1.
Component (A) - Epoxy compound 2: Compound produced in Synthesis Example 2.
Component (A) - Epoxy compound 3: Compound produced in Synthesis Example 3.
Component (B) - EP-4100E: Bisphenol A-type epoxy resin from Adeka Corporation.
Component (B) - ED-509E: p-tert-Butylphenol glycidyl ether from Adeka Corporation.
Component (C) - 2E4MZ: 2-Ethyl-4-methylimidazole.
Inorganic filler - RY-200S: Fumed silica (from Nippon Aerosil Co., Ltd.).

### {Method for Measuring Shear Strength}

Shear strength was measured as follows.

A silicone sheet having a 4-mm-dia. 1-mm-deep hole was placed on each of the following substrates, and the respective resin composition was poured into the hole. This was cured at 150°C for 2 hours, to produce a 4-mm-dia. 1-mm-high cylindrical molded product. Then, the shear strength (MPa) was measured with a 4000Plus Bond Tester (from Nordson DAGE). The substrates used were as follows.
Au substrate: Gold-plated SPCC-SB (from Engineering Test Service Co., Ltd.)
PPS substrate: Susteel GS-40 (from Testpiece Co., Ltd.)
Ni substrate: Ni-plated SPCC-SB (from Testpiece Co., Ltd.)
Al substrate: A5052P (from Testpiece Co., Ltd.)
Cu substrate: C1100 (from Engineering Test Service Co., Ltd.)

**[Table 2]**

| | | | Example 2 | Example 3 | Example 4 | Example 5 | Comparative Example 2 | Comparative Example 3 |
|---|---|---|---|---|---|---|---|---|
| (A) | Epoxy compound 1 | | 20 | 50 | - | - | - | - |
| | Epoxy compound 2 | | - | - | 20 | - | - | - |
| | Epoxy compound 3 | | - | - | - | 20 | - | - |
| (B) | EP-4100E | | 80 | 50 | 80 | 80 | 100 | 80 |
| | ED-509E | | - | - | - | - | - | 20 |
| (C) | 2E4MZ | | 5 | 5 | 5 | 5 | 5 | 5 |
| Inorganic filler | RY-200S | | 3 | 3 | 3 | 3 | 3 | 3 |
| Shear strength (MPa) | | Au | 9.72 | 9.71 | 12.64 | 10.30 | 5.10 | 5.14 |
| | | PPS | 9.25 | 8.84 | 8.71 | 7.83 | 7.32 | 8.67 |
| | | Ni | 10.37 | 10.36 | 11.17 | 13.68 | 0.93 | 6.27 |
| | | Al | 16.76 | 11.51 | n/a | n/a | 10.37 | 7.03 |
| | | Cu | 14.36 | n/a | 13.65 | 12.74 | 6.73 | n/a |

Table 2 shows that, compared to the resin compositions that did not use Epoxy compound 1, the one-pack type epoxy resin compositions of the present invention had superior shear strength on all of the substrates Au, PPS, Ni, Al, and Cu.

## Claims

1. A one-pack type epoxy resin composition comprising:
component (A): a compound represented by general formula (1) below;
component (B): an epoxy resin; and
component (C): an amine-based curing agent, 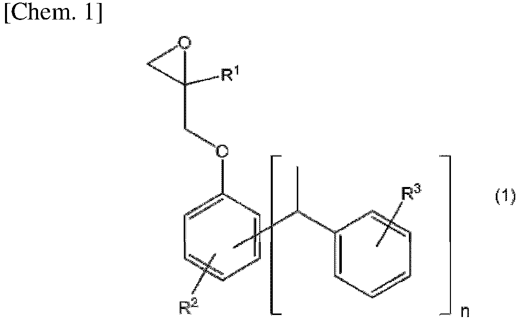 wherein, in the general formula (1), R¹ represents a hydrogen atom or a methyl group; R² and R³ each independently represent a hydrogen atom, an alkyl group having 1 to 6 carbon atoms, or an alkoxy group having 1 to 6 carbon atoms; and n represents an integer of 1 to 3.

2. The one-pack type epoxy resin composition according to claim 1, wherein a mass of the component (A) with respect to a total mass of the component (A) and the component (B) is from 1 to 50 mass%.

3. The one-pack type epoxy resin composition according to claim 1 or 2, wherein the component (C) includes at least one type selected from the group consisting of dicyandiamide-type latent curing agents, imidazole-type latent curing agents, polyamine-type latent curing agents, and polyurea-type latent curing agents.

4. An adhesive comprising the one-pack type epoxy resin composition according to any one of claims 1 to 3.

5. The adhesive according to claim 4, wherein the adhesive is for joining substrates, the substrate being selected from the group consisting of substrates made from iron, aluminum, steel, copper, magnesium, titanium, or an alloy of one or more of these metals and one or more other nonferrous metal, and substrates obtained by subjecting these substrates to nickel plating or gold plating.
